# EUROPEAN PATENT SPECIFICATION

(11) **EP 2 871 396 B1**
(45) Date of publication and mention of the grant of the patent: **08.03.2017**
(21) Application number: 13813334.3
(22) Date of filing: 01.07.2013
(51) Int. Cl.: F16L 15/04, E21B 17/042

(54) **THREADED PIPE JOINT**
GEWINDEROHRVERBINDUNG
RACCORD DE TUYAU FILETÉ

(30) Priority: 04.07.2012 JP 2012150114
(43) Date of publication of application: 13.05.2015
(73) Proprietor: JFE Steel Corporation, Tokyo, 100-0011 (JP)
(72) Inventor: NAGAHAMA, Takuya, Tokyo 100-0011 (JP); TAKAHASHI, Kazunari, Tokyo 100-0011 (JP); CHIKATSUNE, Hiroshi, Tokyo 100-0011 (JP); YOSHIKAWA, Masaki, Tokyo 100-0011 (JP); TAKANO, Jun, Tokyo 100-0011 (JP); KAWAI, Takamasa, Tokyo 100-0011 (JP); UETA, Masateru, Tokyo 100-0011 (JP)
(74) Representative: Grünecker Patent- und Rechtsanwälte PartG mbB
(86) International application number: PCT/JP2013/004061
(87) International publication number: WO 2014/006866

(56) References cited:
- WO-A1-2004/109173
- JP-A- 2005 308 201
- JP-A- 2006 526 747
- JP-A- 2009 531 603
- JP-A- 2012 031 988
- US-A1- 2004 262 919
- US-A1- 2011 241 340

## Description

### Technical Field:

The present invention relates to a threaded joint for pipes and, more specifically, to a threaded joint for pipes having high sealability and high compression resistance suitable for use in connecting oil well pipes including tubing and casing generally used in prospecting for oil wells and gas wells and in production, that is, steel pipes, such as oil country tubular goods (OCTG), riser pipes, and line pipes.

### Background Art:

Threaded joints (like in US2004/0262919) are widely used in connecting pipes, such as oil well pipes, which are used in oil production facilities. For connection of pipes for use in oil or gas prospecting and production, standard threaded joints based on the American Petroleum Institute (API) standard have been conventionally used. However, because crude oil wells and natural gas wells have recently increased in depth, and horizontal wells and directional wells have increased more than vertical wells, excavation and production environments are becoming severe. Furthermore, an increase in well development under hostile environments, such as the sea and polar regions, diversifies performance requirements for threaded joints, such as compression resistance, bending resistance, and external-pressure sealing performance (external pressure resistance). This therefore increases the use of high-performance special threaded joints called premium joints.

The premium joint is generally a joint composed of a pin component and a box component joined together, each including a tapered thread, a sealing portion (specifically, a metal-to-metal sealing portion), and a shoulder portion (specifically, a torque shoulder portion). The tapered thread is important to firmly secure the tubular joint. The sealing portion functions to ensure sealability by the box component and the pin component coming into metal-contact at this portion. The shoulder portion serves as an abutment during tightening of the joint.

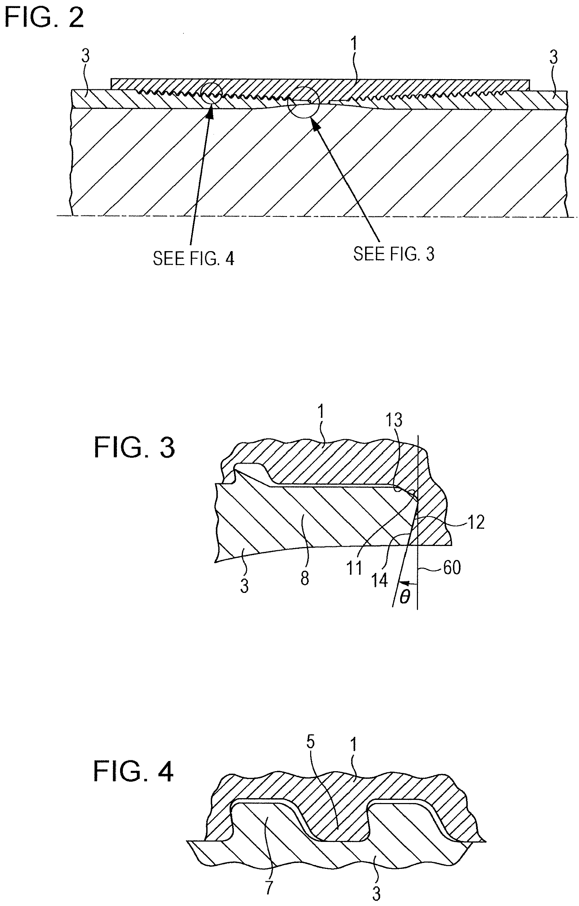

Figs. 2 to 4 are schematic explanatory diagrams of a premium joint for oil well pipes, which are vertical cross-sectional views of a threaded joint for cylindrical pipes. The threaded joint includes a pin component 3 and a box component 1 corresponding thereto. The pin component 3 (pin 3) has a male member 7 on the outer surface thereof and a no-threaded portion called a nose portion 8 (pin nose 8) provided at an end of the pin 3 and next to the male member 7. The nose portion 8 has a sealing portion 11 on the outer peripheral surface thereof and a shoulder portion 12 at the end face thereof. The opposing box component 1 has a female member 5, a sealing portion 13, and a shoulder portion 14 on the inner surface thereof, which can be screwed on or come into contact with the male member 7, the sealing portion 11, and the shoulder portion 12 of the pin 3, respectively.

Recently, the increasing severity of the usage environment of oil well pipes requires also threaded joints not to cause leakage under a high axial force and high inner and external pressures.

An example of means for providing a threaded joint that is particularly resistant to a compression load is disclosed in Patent Literature 1. Disclosed is a threaded joint for pipes including a pin, which is a male member element provided at an end of a first tubular member, and a box, which is a female member element provided at and end of a second tubular member, and having the following features. Each of the pin and the box includes a threaded portion and at least one torque shoulder surface. The external thread ridges of the threaded portion of the pin fit in the internal thread ridges of the threaded portion of the box. The at least one torque shoulder surface of the pin comes into contact with the at least one torque shoulder surface of the box in the axial direction of the tubular joint. One of the contact torque shoulder surfaces is an end shoulder surface that constitutes an end face in the cross-sectional direction of the pin or box. The threads of the male member and the female member are substantially trapezoidal, each includes a top face, a load surface, and an insertion surface, and are separated from each other by the root thereof. The lip length, which is the axial distance between the end shoulder surface of the pin or box having the end shoulder surface and the load surface of a fitted thread closest to the end shoulder surface, is 140 more times as long as the insertion surface interval, which is the axial distance between the insertion surface of the external thread ridge and the insertion surface of the internal thread ridge at the fit threaded portions of the pin and the box when the load surface of the external thread ridge is in contact with the load surface of the internal thread ridge.

This threaded joint for pipes allows airtightness to be ensured by preventing the plastic deformation of the pin nose 8 under a compression load.

### [Citation List]

### [Patent Literature]

[PTL 1] Japanese Unexamined Patent Application Publication (Translation of PCT application) No. 2009-531603

### Summary of Invention:

### Technical Problem:

In Patent Literature 1, the end shoulder surface means a shoulder surface perpendicular to the axis of the pin component or the box component because the end shoulder surface constitutes the cross-sectional end face of the pin component or the box component. However, as shown in Fig. 3 of related art, the mutual contact surfaces of the shoulder portions 12 and 14 do not generally form a surface perpendicular to the axis but form a conical surface of a right circular cone whose bottom is a vertical surface 60 passing through an end of the pin and perpendicular to the axis and which has an apex opposite to the center in the longitudinal direction of the threaded joint when tightened as viewed from the bottom of the circular cone. Specifically, a shoulder angle θ, which is an angle formed by the mutual contact surfaces of the shoulder portions 12 and 14 and the vertical surface 60, is generally set to larger than or equal to 0° (preferably, larger than 0° and 15° or less). In contrast, Patent Literature 1 covers only a case where θ = 0° and excludes a case where θ > 0°. Therefore, there is some question as to whether a specific relationship between the lip length and the insertion surface interval (lip length ≥140 × insertion surface interval), which is a feature of Patent Literature 1, can be a critical condition for ensuring airtightness achieved by preventing the plastic deformation of the pin nose 8 under a compression load even if θ > 0°.

In other words, the related art has a problem in that means for preventing local plastic deformation of the pin nose under a compression load to ensure airtightness in the case where the shoulder angle θ is 0° or larger has not yet been established.

### Solution to Problem:

The inventors have made the present invention with the following context and configuration under diligent examination to find means for solving the problem above.

In a threaded joint for pipes including:
a pin component including a male member, a nose portion extending from the male member toward a pipe end, and a shoulder portion provided at an end of the nose portion; and a box component including a female member screwed onto the male member, an inner peripheral surface facing an outer peripheral surface of the pin nose or the nose portion of the pin component, and a shoulder portion that comes into contact with the shoulder portion of the pin component,
wherein the outer peripheral surface of the pin nose is a convex surface;
the inner peripheral surface of the box component is a tapered surface that interferences with the outer peripheral surface of the pin nose when joined with the pin component;
the shoulder angle θ of the shoulder portion is larger than or equal to 0° (preferably, larger than 0° and 15° or less); and
the pin component and the box component are joined by the screwing to bring the convex surface of the pin nose and the tapered surface of the box component into metal-to-metal contact with each other, so that the contact interface thereof forms a sealing portion,
   (a) plastic deformation of the pin nose under a compression load starts locally around an end of the pin nose, and the portion of the pin component which is close thereto whose convex surface comes into high-pressure contact with the tapered surface of the box component to form an interface is prone to plastic deformation; and
   (b) means for effectively preventing plastic deformation that is prone to occur at a position close to the end of the pin nose that comes into high-pressure-contact with the tapered surface of the box component is to set a box-side lip length L, which is the axial distance between a pin-nose-end corresponding point of the box component and a load surface of a lip-side internal thread ridge closest to the pin-nose-end corresponding point, is 300 or more times as long as an insertion surface interval δ, which is the axial interval between an insertion surface of an internal thread ridge at a position two or more ridges backwards from the lip-side internal thread ridge and an insertion surface of an external thread ridge facing the insertion surface when tightened, that is, L ≥ 300 × δ.

The present invention is as follows:
A threaded joint for pipes, comprising: a pin component 3 including a male member 7, a nose portion 8 extending from the male member 7 toward a pipe end, and a shoulder portion 12 provided at an end of the nose portion 8; and a box component 1 including a female member 5 screwed onto the male member 7, an inner peripheral surface 30 facing an outer peripheral surface 20 of the pin nose or the nose portion 8 of the pin component 3, and a shoulder portion 14 that comes into contact with the shoulder portion 12 of the pin component 3, wherein the outer peripheral surface 20 of the pin nose 8 is a convex surface 20; the inner peripheral surface 30 of the box component 1 is a tapered surface 30 that interferences with the convex surface 20 of the pin nose 8 when joined with the pin component 3; the shoulder angle θ of the shoulder portions 12 and 14 is larger than or equal to 0°; the pin component 3 and the box component 1 are joined by the screwing to bring the convex surface 20 of the pin nose 8 and the tapered surface 30 of the box component 1 into metal-to-metal contact with each other, so that the contact interface thereof forms a sealing portion 40, characterized in that a box-side lip length L, which is the axial distance between a pin-nose-end corresponding point P of the box component 1 and a load surface 18b of a lip-side internal thread ridge 50 closest to the pin-nose-end corresponding point P, is 300 or more times as long as an insertion surface interval δ, which is the axial interval between an insertion surface 19b of an internal thread ridge at a position two or more ridges backwards from the lip-side internal thread ridge 50 and an insertion surface 19a of an external thread ridge facing the insertion surface 19b when tightened.

### Advantageous Effects of Invention:

In the threaded joint according to the present invention, the relationship between the box-side lip length L and the insertion surface interval δ satisfies L ≥ 300 × δ. This can effectively prevent plastic deformation that is prone to occur particularly at a position close to the end of the pin nose that comes into high-pressure-contact with the tapered surface of the box component when a compression load is applied to the threaded joint whose shoulder angle θ is larger than or equal to 0°, thus ensuring airtightness. In view of enhancement of the effect, θ is preferably larger than 0° and is more preferably larger than 0° and 15° or less.

### Brief Description of Drawings:

[Fig. 1] Fig. 1 is a cross-sectional view of an example of threaded joint for pipes according to the present invention.
[Fig. 2] Fig. 2 is a cross-sectional view of a conventional threaded joint for pipes.
[Fig. 3] Fig. 3 is an enlarged cross-sectional view of the vicinity of the pin nose in Fig. 2.
[Fig. 4] Fig. 4 is an enlarged cross-sectional view of the threaded portion in Fig. 2.

### Description of Embodiment:

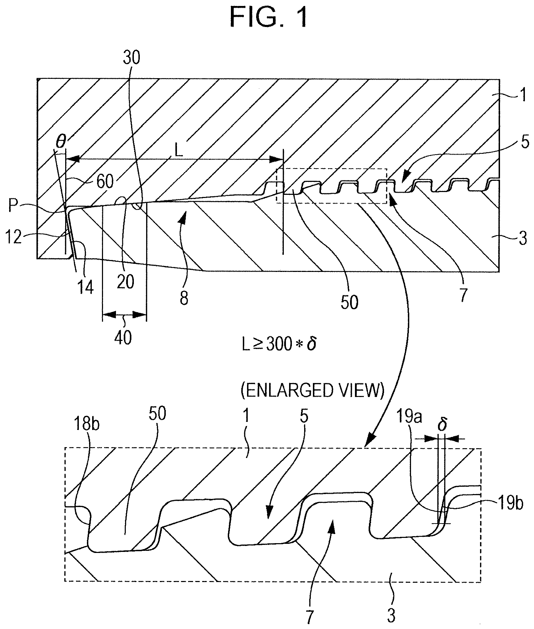

Fig. 1 is a cross-sectional view of an example of the present invention. In this example, a threaded joint for pipes includes a pin component 3 having a male member 7, a nose portion 8 extending from the male member 7 toward a pipe end and a shoulder portion 12 provided at an end of the nose portion 8; and a box component 1 having a female member 5 screwed onto the male member 7, an inner peripheral surface 30 facing an outer peripheral surface 20 of the pin nose or the nose portion 8 of the pin component 3, and a shoulder portion 14 that comes into contact with the shoulder 12 of the pin component 3. The outer peripheral surface 20 of the pin nose 8 is a convex surface 20. The inner peripheral surface 30 of the box component 1 is a tapered surface 30 that interferes with the convex surface 20 of the pin nose 8 when joined with the pin component 3. The shoulder angle θ of the shoulder portions 12 and 14 is larger than 0° and 15° or less. The pin component (3) and the box component (1) are joined together by the screwing to bring the convex surface 20 of the pin nose 8 and the tapered surface 30 of the box component 1 into metal-to-metal contact with each other, so that the contact interface thereof forms a sealing portion 40. A box-side lip length L, which is the axial distance between a pin-nose-end corresponding point P of the box component 1 and a load surface 18b of a lip-side internal thread ridge 50 closest to the pin-nose-end corresponding point P, is 300 or more times as long as an insertion surface interval δ, which is the axial interval between an insertion surface 19b of an internal thread ridge at a position two or more ridges backwards from the lip-side internal thread ridge 50 and an insertion surface 19a of an external thread ridge facing the insertion surface 19b when tightened, that is, L ≥ 300 × δ.

This allows the compression deformation of the portion of the pin nose 8 facing the portion of the box component 1 within the box-side lip length L when a compression load is applied to fall within an elastic deformation, thus providing an effect of preventing the sealing portion 40 from being prone to plastic deformation (maintaining the deformation of the sealing portion 40 within an elastic deformation), thereby ensuring airtightness. If L < 300*δ, the above effect is poor, thus making it difficult to ensure airtightness.

The reason why the internal thread ridge according to the definition of the insertion surface interval δ is the internal thread ridge at the position two or more ridges backwards from the lip-side internal thread ridge (referred to as a position XC) is that the height of the external thread ridge whose insertion surface faces the insertion surface of the internal thread ridge (referred to as a corresponding external thread ridge) at the position XC when tightened is H/2 or larger, while the height of the corresponding external thread ridge is smaller than H/2 at a position forwards from the position XC, thus resulting in an indefinite δ, where H is a normal ridge height, and δ is defined at a position substantially half of the height of the ridges (H/2).

Although the upper limit of L/δ is not particularly limited, it is preferable that L/δ be set to 1,000 or less in view of production efficiency of thread cutting.

### [Examples]

Samples of threaded joints for steel pipes with an outside diameter of 9 - 5/8 inches and a wall thickness of 0.545 inch shown on Table 1 are manufactured in accordance with the threaded joint shown in Fig. 1 and underwent an ISO 13679 series A test. The results show that the invention examples exhibit higher sealability than the comparative examples, as shown in Table 1.

**Table 1:**

| Level | Shoulder angle θ(°) | Box-side lip length L (mm) | Insertion surface interval δ (mm) | L/δ | Result | Remarks |
|---|---|---|---|---|---|---|
| 1 | 5 | 25 | 0.03 | 833 | No leakage | Invention example |
| 2 | 10 | 25 | 0.06 | 417 | No leakage | Invention example |
| 3 | 0 | 20 | 0.06 | 333 | No leakage | Invention example |
| 4 | 15 | 15 | 0.03 | 500 | No leakage | Invention example |
| 5 | 15 | 25 | 0.09 | 278 | Leak at LP13 | Comparative example |
| 6 | 0 | 15 | 0.06 | 250 | Leak at LP2 | Comparative example |

### Reference Signs List:

1 box component
3 pin (pin component)
5 female member (internal thread)
7 male member (external thread)
8 nose portion (pin nose)
11 sealing portion
12 shoulder portion
13 sealing portion
14 shoulder portion
18b load surface of lip-side internal thread ridge
19a insertion surface of external thread ridge
19b insertion surface of internal thread ridge
20 nose outer peripheral surface of pin component (convex surface)
30 inner peripheral surface (tapered surface) of box component facing pin nose outer peripheral surface
40 sealing portion
50 lip-side internal thread ridge
60 vertical surface perpendicular to pipe axis
P pin-nose-end corresponding point
L box-side lip length
δ insertion surface interval
θ shoulder angle

## Claims

1. threaded joint for pipes, comprising:
a pin component 3 including a male member 7, a nose portion 8 extending from the male member 7 toward a pipe end, and a shoulder portion 12 provided at an end of the nose portion 8; and
a box component 1 including a female member 5 screwed onto the male member 7, an inner peripheral surface 30 facing an outer peripheral surface 20 of the pin nose or the nose portion 8 of the pin component 3, and a shoulder portion 14 that comes into contact with the shoulder portion 12 of the pin component 3,
wherein the outer peripheral surface 20 of the pin nose 8 is a convex surface 20; the inner peripheral surface 30 of the box component 1 is a tapered surface 30 that interferences with the convex surface 20 of the pin nose 8 when joined with the pin component 3; the shoulder angle θ of the shoulder portions 12 and 14 is larger than or equal to 0°; the pin component 3 and the box component 1 are joined by the screwing to bring the convex surface 20 of the pin nose 8 and the tapered surface 30 of the box component 1 into metal-to-metal contact with each other, so that the contact interface thereof forms a sealing portion 40,
**characterized in that** a box-side lip length L, which is the axial distance between a pin-nose-end corresponding point P of the box component 1 and a load surface 18b of a lip-side internal thread ridge 50 closest to the pin-nose-end corresponding point P, is 300 or more and 1,000 or less times as long as an insertion surface interval δ, which is the axial interval between an insertion surface 19b of an internal thread ridge at a position two or more ridges backwards from the lip-side internal thread ridge 50 and an insertion surface 19a of an external thread ridge facing the insertion surface 19b when tightened.

## Patentansprüche

1. Gewindeverbindung für Rohre, die umfasst:
ein Stiftbauteil 3 mit einem Steckelement 7, einen Nasenteil 8, der sich vom Steckelement 7 zum Rohrende erstreckt, und einen Ansatzteil 12, der an einem Ende des Nasenteils 8 bereitgestellt wird; und
ein Kastenbauteil 1 mit einem Aufnahmeelement 5, das auf das Steckelement 7 geschraubt wird, eine inneren Umfangsfläche 30, die einer äußeren Umfangfläche 20 der Stiftnase oder des Nasenteils 8 des Stiftbauteils 3 zugewandt ist, und einen Ansatzteil 14, der mit dem Ansatzteil 12 des Stiftbauteils 3 in Kontakt kommt,
wobei die äußere Umfangsfläche 20 der Stiftnase 8 eine konvexe Fläche 20 ist; die innere Umfangsfläche 30 des Kastenbauteils 1 eine spitz zulaufende Fläche 30 ist, die sich mit der konvexen Fläche 20 der Stiftsnase 8 beeinflusst, wenn sie mit dem Stiftbauteil 3 verbunden wird; der Anschlagwinkel θ der Anschlagteile 12 und 14 größer oder gleich 0° ist; das Stiftbauteil 3 und das Kastenbauteil 1 durch Schrauben verbunden werden, um die konvexe Fläche 20 der Stiftnase 8 und die spitz zulaufende Fläche 30 des Kastenbauteils 1 in einen Kontakt Metall zu Metall miteinander zu bringen, so dass die Kontaktschnittstelle davon einen Dichtungsteil 40 bildet,
**dadurch gekennzeichnet, dass**
eine kastenseitige Lippenlänge L, die ein axialer Abstand zwischen einem Stiftnasenende entsprechend Punkt P des Kastenbauteils 1 und einer Lastfläche 18b eines lippenseitigen internen Gewindestegs 50 am nächsten zum Stiftnasenende entsprechend Punkt P ist, 300 mal oder mehr und 1000 mal oder weniger lang ist als ein Einsetzflächen-Intervall δ, das ein axiales Intervall zwischen einer Einsetzfläche 19b eines inneren Gewindestegs an einer Position zwei oder mehr Stege rückwärts vom lippenseitigen inneren Gewindesteg 50 und einer Einsetzfläche 19a eines äußeren Gewindestegs ist, die beim Festziehen der Einsetzfläche 19b zugewandt ist.

## Revendications

1. Joint fileté pour tuyaux comprenant :
un composant formant goujon 3 incluant un élément mâle 7, une partie formant embout 8 s'étendant depuis l'élément mâle 7 vers une extrémité de tuyau, et une partie d'épaulement 12 prévue à l'extrémité la partie formant embout 8, et
un composant formant manchon 1 incluant un élément femelle 5 vissé sur l'élément mâle 7, la surface périphérique interne 30 faisant face à la surface périphérique externe 20 de l'embout de goujon ou de la partie formant embout 8 du composant formant goujon 3, et une partie d'épaulement 14 qui vient en contact avec la partie d'épaulement 12 du composant formant goujon 3,
dans lequel la surface périphérique externe 20 de l'embout de goujon 8 est une surface convexe 20 ; la surface périphérique interne 30 du composant formant manchon 1 est une surface chanfreinée 30 qui vient interagir avec la surface 20 de l'embout de goujon 8 lorsqu'elle est réunie avec le composant formant goujon 3 ; l'angle d'épaulement θ des parties d'épaulement 12 et 14 est supérieur ou égal à 0 ° ; le composant formant goujon 3 et le composant formant manchon 1 sont réunis par le vissage pour amener en contact métal sur métal la surface convexe 20 de l'embout de goujon 8 et la surface chanfreinée 30 du composant formant manchon 1 l'une avec l'autre de sorte à ce que l'interface de contact entre celles-ci forme une partie formant joint 40,
**caractérisé en ce que** la longueur des lèvres du côté manchon L, qui représente la distance axiale entre un point correspondant d'extrémité d'embout de goujon P du composant formant manchon 1 et la surface de charge 18b de la nervure de filetage interne du côté lèvre 50 la plus proche du point correspondant d'extrémité d'embout de goujon P, vaut 300 fois ou plus et 1000 fois ou moins que l'intervalle δ de surface d'insertion qui représente l'intervalle axial entre la surface d'insertion 19b d'une nervure de filetage interne à une position située à deux nervures ou plus en arrière de la nervure de filetage interne du côté lèvre 50 et une surface d'insertion 19a de nervure de filetage externe faisant face à la surface d'insertion 19b lorsque l'ensemble est serré.
